# FASCICULE DE BREVET EUROPEEN

(11) **EP 2 517 861 B1**
(45) Date de publication et mention de la délivrance du brevet: **19.08.2020**
(21) Numéro de dépôt: 12165690.4
(22) Date de dépôt: 26.04.2012
(51) Int. Cl.: B29C 45/14, B29C 45/44, B29C 45/33, B29L 31/30

(54) **Procédé de moulage d'un élément plastique comprenant un insert et élément plastique associé**
Verfahren zum Formguss eines Plastikelements, das einen Einsatz umfasst, und entsprechendes Plastikelement
Method for moulding a plastic element including an insert and associated plastic element

(30) Priorité: 29.04.2011 FR 1153682
(43) Date de publication de la demande: 31.10.2012
(73) Titulaire: Faurecia Intérieur Industrie, 92000 Nanterre (FR)
(72) Inventeur: Oeuvrard, Jean Francois, 95300 PONTOISE (FR); Marchetto, Gérald, 27950 SAINT JUST (FR)
(74) Mandataire: Lavoix

(56) Documents cités:
- JP-A- H11 123 725
- JP-A- 2009 113 244
- US-A- 5 381 636
- US-A1- 2005 023 724
- US-A1- 2008 292 851

## Description

La présente invention concerne un procédé de moulage d'un élément plastique du type comprenant un corps présentant une surface à partir de laquelle s'étend au moins une nervure, et un insert, disposé entre le corps et l'au moins une nervure et agencé au moins partiellement contre ladite surface et sous ladite nervure, le procédé comprenant les étapes suivantes :
- installation de l'insert contre une paroi d'une cavité d'injection, ladite paroi comprenant au moins une fente s'étendant au moins partiellement en regard d'au moins une partie de l'insert, ladite fente étant adaptée pour former la nervure de l'élément plastique, et
- injection de matériau de moulage dans la cavité d'injection pour créer le corps et la nervure de l'élément plastique.

Un tel élément plastique est typiquement destiné à former une surface tactile pour, par exemple, une console centrale de véhicule automobile, la ou chaque nervure étant destinée à rigidifier l'élément plastique.

Un élément plastique comprenant un corps, des protubérances et un insert, le corps et les protubérances étant obtenus par injection, est également connu de US 2008/0292851 A1. Un autre élément plastique présentant une protubérance obtenue par injection est connu de JP 2009-113244. Le document US5381636A décrit un couvercle protecteur pour barres d'armature en béton comprenant un collier cylindrique allongé pour fixer le couvercle protecteur à une extrémité exposée d'une barre d'armature en béton, un chapeau qui est fixé perpendiculairement au collier par des nervures de renforcement, et une plaque métallique disposée entre le collier et le chapeau.

Cependant, les éléments plastiques connus n'offrent pas entière satisfaction. En effet, il arrive souvent que l'insert soit endommagé lors du processus de moulage et que, une fois intégré dans l'élément plastique, il ne puisse pas réaliser sa fonction correctement.

Un objectif de l'invention est donc de proposer un procédé de moulage de l'élément plastique adapté pour ne pas endommager l'insert.

A cet effet, l'invention a pour objet un procédé de moulage du type précité, dans lequel un élément de support est disposé dans la fente, contre l'insert, pour supporter ledit insert pendant l'injection.

Selon des modes de réalisation préférés de l'invention, le procédé de moulage comprend l'une ou plusieurs des caractéristiques suivantes, prise(s) isolément ou suivant toute(s) combinaison(s) techniquement possible(s) :
- l'insert comprend un composant électrique ;
- l'insert comprend au moins un film ;
- la paroi contre laquelle est installé l'insert définit une surface de réception de l'insert, et l'élément de support définit une surface d'appui de l'insert qui, lorsque l'élément de support est disposé dans la fente, s'étend sensiblement dans le prolongement de la surface de réception ;

- l'élément de support est configuré pour former une fenêtre entre la nervure et le corps, au droit de l'insert ;
- la cavité d'injection est délimitée par deux parties de moule mobiles l'une par rapport à l'autre selon une direction longitudinale de démoulage de l'élément plastique, et l'élément de support est manoeuvré par l'intermédiaire d'un bras adapté pour coulisser à l'intérieur de l'une de ces deux parties de moule suivant une direction de coulissement inclinée par rapport à la direction longitudinale.

L'invention a également pour objet un élément plastique obtenu par le procédé selon la revendication 1, comprenant un corps et au moins une nervure s'étendant sur une face dudit corps, un insert s'étendant le long de ladite face du corps, à cheval sur la nervure, caractérisé en ce que la nervure et le corps délimitent ensemble une fenêtre, l'insert s'étendant au travers de ladite fenêtre.

Selon des modes de réalisation préférés de l'invention, l'élément plastique comprend l'une ou plusieurs des caractéristiques suivantes, prise(s) isolément ou suivant toute(s) combinaison(s) techniquement possible(s) :
- l'insert comprend un composant électrique ;
- l'insert comprend au moins un film.

L'invention a également pour objet un véhicule automobile comprenant un élément plastique tel que défini ci-dessus.

D'autres caractéristiques et avantages de l'invention apparaîtront à la lecture de la description qui va suivre, donnée uniquement à titre exemple et faite en référence aux dessins annexés, sur lesquels :
- la Figure 1 est une vue partielle en perspective, de dessous, d'un élément plastique selon l'invention,
- la Figure 2 est une vue similaire à la Figure 1 d'un élément plastique selon une variante de l'invention,
- la Figure 3 est vue en coupe, selon un plan marqué III-III sur la Figure 1, de l'élément plastique, lors de son moulage,
- la Figure 4 est vue en coupe, selon un plan marqué IV-IV sur la Figure 1, de l'élément plastique, lors de son moulage,
- la Figure 5 est une vue en coupe d'un dispositif de moulage de l'élément plastique, dans une première configuration, et
- la Figure 6 est une vue similaire à la Figure 5, le dispositif de moulage étant dans une deuxième configuration.

Dans la suite, les termes d'orientation « haut », « bas », « dessous », « dessus », « inférieur », « supérieur » sont à entendre selon une direction allant de la face cachée de l'élément plastique à sa face visible.

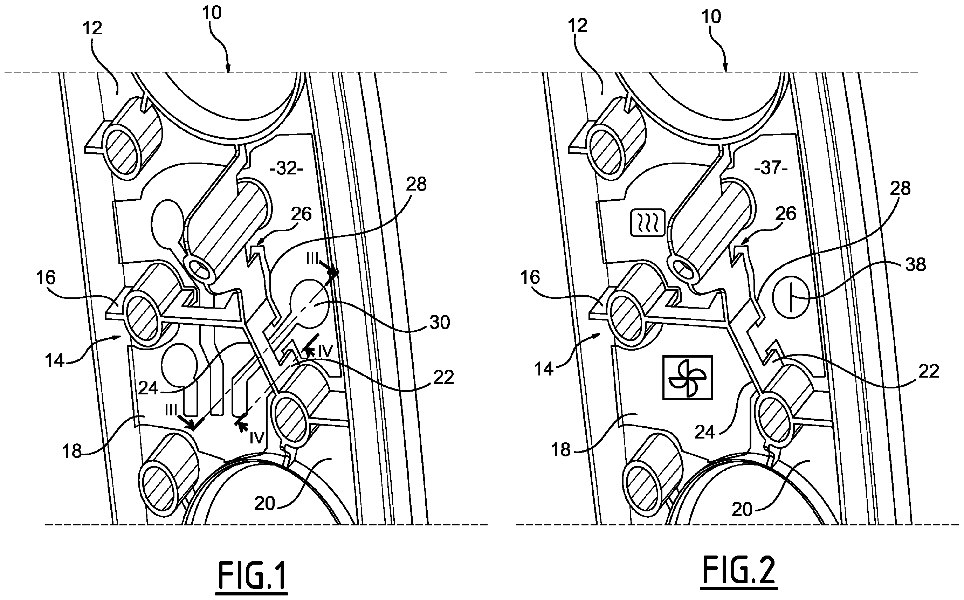

Comme visible sur la Figure 1, l'élément plastique 10 selon l'invention comprend un corps 12, un réseau 14 de nervures 16 de renforcement, pour rigidifier l'élément plastique 10, et un insert 18, disposé entre le corps 12 et les nervures 16.

Le corps 12 définit une face supérieure visible (non représentée) de l'élément plastique 10. Il est en matériau plastique et est de préférence transparent ou translucide.

Les nervures 16 s'étendent le long d'une face inférieure 20 du corps 12, opposée à la face supérieure. Elles font saillie vers le bas depuis la face inférieure 20. Les nervures 16 s'entrecroisent de façon à former le réseau 14. Chaque nervure 16 est sensiblement rectiligne et comprend deux grandes faces 22, 24 opposées.

Des nervures 16 délimitent avec le corps 12 des fenêtres 26 disposées entre les nervures 16 et le corps 12. Chaque fenêtre 26 s'étend au travers d'une nervure 16 et débouche dans les deux grandes faces 22, 24 de la nervure 16.

L'insert 18 s'étend le long de la face inférieure 20 du corps 12, à cheval sur des nervures 16. Il est disposé au-dessus des nervures 16, entre chaque nervure 16 et le corps 12.

L'insert 18 s'étend à cheval sur chaque nervure 16 en regard d'une fenêtre 26. En d'autres termes, il s'étend au travers de chaque fenêtre 26.

L'insert 18 comprend également des découpes 28 de passage des nervures 16, de sorte que chaque nervure 16 s'étend à partir du corps 12 au travers d'une découpe 28.

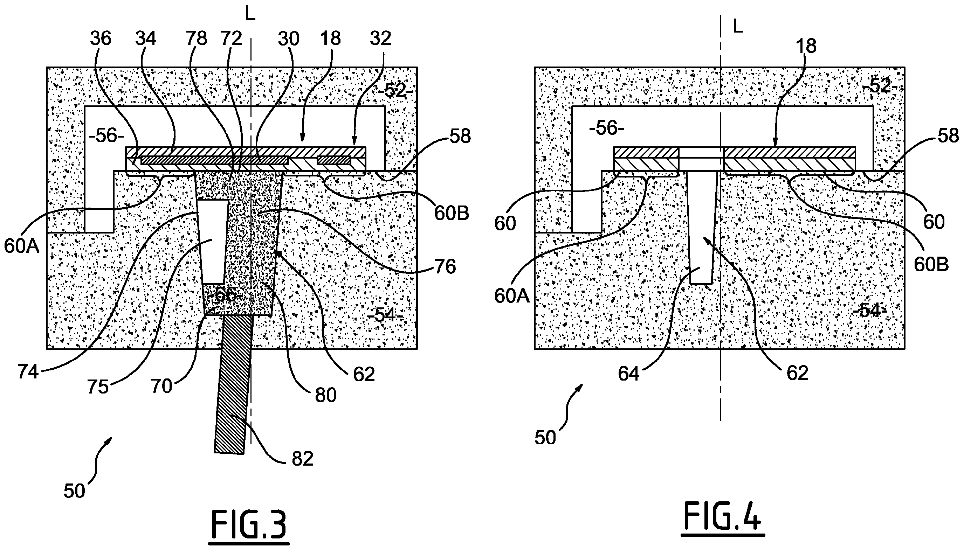

L'insert 18 comprend au moins un composant électrique. Dans l'exemple représenté, il comprend ainsi des pistes conductrices 30, typiquement en cuivre ou à base d'encre conductrice, pour conduire un courant électrique. Il comprend également un film 32 abritant les pistes conductrices 30. Comme visible sur la Figure 3, le film 32 est un film bicouche, les pistes conductrices 30 étant disposé entre les deux couches 34, 36 du film 32. De préférence, le film 32 est translucide ou transparent, pour permettre le rétro-éclairage des zones tactiles.

Comme visible sur la Figure 2, en variante, le film 32 ne contient pas de piste conductrice. Il comprend une unique couche 37 portant des pictogrammes 38 gravés ou imprimés sur la couche 37. Typiquement, les pictogrammes 38 sont constitués par des zones translucides ou transparentes de la couche 37, le reste de la couche 37 étant opaque, de façon à permettre l'affichage des pictogrammes 38 sur la face extérieure visible lorsque l'élément plastique 10 est rétro-éclairé.

On notera qu'il est possible de combiner les modes de réalisation des Figures 1 et 2 en formant un insert 18 ayant un film bicouche et un composant électrique disposé à l'intérieur du film bicouche, l'une des couches du film portant au moins un pictogramme.

L'élément plastique 10 est obtenu par moulage. Un dispositif 50 de moulage de l'élément plastique 10 va maintenant être décrit, en référence aux Figures 3 à 6.

Comme visible sur la Figure 4, le dispositif de moulage 50 comprend deux parties de moule 52, 54 mobiles l'une par rapport à l'autre en translation selon une direction longitudinale L et destinées à être appliquées l'une contre l'autre pour former entre elles une cavité 56 d'injection de l'élément plastique 10.

Une paroi 58 de la cavité 56, faisant partie de la partie de moule 54, délimite une surface 60 de réception de l'insert 18. Cette surface de réception 60 est discontinue. La paroi 58 comprend des fentes 62 s'étendant chacune entre des portions 60A, 60B de la surface de réception 60. Chaque fente 62 est adaptée pour former une nervure 16.

Chaque fente 62 comprend des tronçons étroits et au moins un tronçon élargi. Sur la Figure 4 est représenté un tronçon étroit 64 d'une fente 62. Sur la Figure 3 est représenté un tronçon élargi 66 de cette même fente 62.

Comme visible sur la Figure 3, le tronçon élargi 66 est adapté pour recevoir un élément 70 de support de l'insert 18 au-dessus de la fente 62. L'élément de support 70 est disposé en-dessous de l'insert 18, dans la fente 62. Il définit une surface 72 d'appui de l'insert 18 qui, lorsque l'élément de support 70 est disposé dans la fente 62, s'étend sensiblement dans le prolongement de la surface de réception 60.

En particulier, la surface d'appui 72 est une surface pleine et continue, de façon à éviter le contact entre la face inférieure de l'insert 18 et du matériau plastique injecté.

L'élément de support 70 définit avec une paroi 74 de la fente 62 un passage 75 d'injection de matériau plastique. A cet effet, l'élément de support 70 comprend un corps 76 et un appendice 78 faisant saillie par rapport au corps 76, l'appendice 78 étant disposé contre l'insert 18, entre l'insert 18 et un espace vide du tronçon élargi 66 lorsque l'élément de support 70 est disposé dans la fente 62, ledit espace vide constituant le passage 75.

Le passage 75 s'étend dans le prolongement des tronçons étroits 64 de la fente 62, de façon à ce que la nervure 16 correspondante soit rectiligne.

Le corps 76 est disposé dans une portion 80 du tronçon élargi 66 en décrochement par rapport aux tronçons étroits 64 de la fente 62.

L'appendice 78 est destiné à former la fenêtre 26 entre la nervure 16 et le corps 12, au droit de l'insert 18.

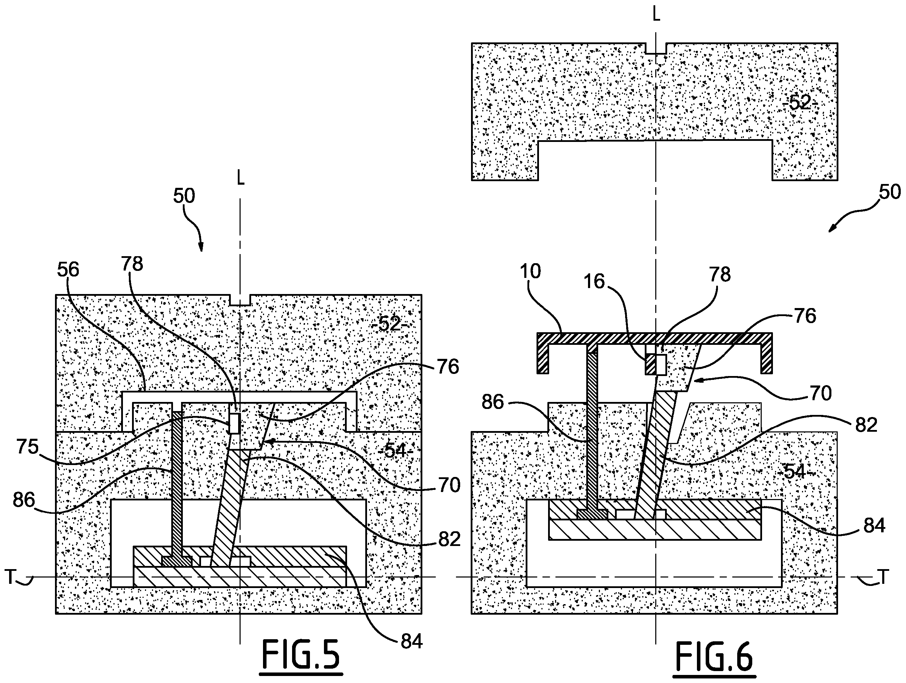

Comme visible sur les Figures 5 et 6, l'élément de support 70 est relié par un bras 82 à une plateforme 84, pour manœuvrer l'élément de support 70. L'élément de support 70 est solidaire du bras 82.

Le bras 82 est sensiblement rectiligne et s'étend partiellement au travers de la partie de moule 54. Il s'étend suivant une direction inclinée par rapport à la direction longitudinale L et est coulissant par rapport à la partie de moule 54 suivant ladite direction inclinée. Il est également monté coulissant par rapport à la plateforme 84 suivant une direction transversale T sensiblement perpendiculaire à la direction longitudinale L et coplanaire avec la direction longitudinale L et avec la direction de coulissement du bras 82 par rapport à la partie de moule 54. La direction transversale T est de préférence sensiblement perpendiculaire par rapport à la direction d'extension de la fente 62.

La plateforme 84 est mobile longitudinalement par rapport à la partie de moule 54. Elle est disposée à l'opposée de la cavité d'injection 56 par rapport à la partie de moule 54. Elle supporte un pied 86 s'étendant longitudinalement et partiellement au travers de la partie de moule 54, jusqu'à la cavité d'injection 56 lorsque le dispositif de moulage 50 est dans une configuration de moulage de la partie de moule plastique 10.

Le pied 86 est adapté pour coulisser par rapport à la partie de moule 54 suivant la direction longitudinale L, pour éjecter l'élément plastique 10 en fin de moulage.

Un procédé de moulage de la partie de moule 10 va maintenant être décrit, en regard des Figures 5 et 6.

Dans un premier temps, le dispositif de moulage 50 est en configuration de moulage, comme représenté sur la Figure 5 : les deux parties de moule 52, 54 sont accolées l'une contre l'autre, la plateforme 84 est à l'écart de la partie de moule 54 et l'élément de support 70 est disposé dans le tronçon élargi 66 de la fente 62. L'insert 18 est installé dans la cavité d'injection 56, contre la surface de réception 60 de la paroi 58 et contre l'élément de support 70. En particulier, l'insert 18 est installé de sorte que ses découpes 28 soient disposées au droit des tronçons étroits 64 des fentes 62.

Puis du matériau de moulage, typiquement du plastique, est injecté dans la cavité 56, pour former le corps 12 et les fentes 16 de l'élément plastique 10. Ce matériau remplit la cavité 56 et pénètre dans la fente 62, remplissant les tronçons étroits 64 de la fente 62, ainsi que le passage d'injection 75. Sous l'effet de la pression du matériau de moulage dans la cavité 56, l'insert 18 est plaqué contre la paroi 58 et contre l'élément de support 70. L'élément de support 70 fournit ainsi un support à l'insert 18 au-dessus de la fente 62 et évite que celui-ci ne se déforme sous l'effet de la pression. Pareillement, l'élément de support 70 empêche que du matériau d'injection présent dans la fente 62 n'exerce une pression sur la face inférieure de l'insert 18, entraînant ainsi une déformation de l'insert 18 vers l'intérieur de la cavité d'injection 56.

Une fois le matériau de moulage suffisamment solidifié, l'élément plastique 10 est démoulé. Le dispositif de moulage 50 passe alors dans une configuration de démoulage de l'élément plastique 10 : les deux parties de moule 52, 54 sont écartées l'une de l'autre et la plateforme 84 est rapprochée de la partie de moule 54. Lors du rapprochement de la plateforme 84, le bras 82 et le pied 86 se déplacent longitudinalement par rapport à la deuxième partie de moule 54. Le pied 86 et l'élément de support 70 sollicitent alors l'élément plastique longitudinalement à l'écart de la partie de moule 54. Dans le même temps, de par son inclinaison par rapport à la direction longitudinale, le bras 82 coulisse transversalement sur la plateforme 84, provoquant le déplacement transversal de l'élément de support 70. L'appendice 78 est ainsi délogé de la fenêtre 26, permettant le démoulage de l'élément plastique 10 hors du dispositif de moulage 50.

Grâce à l'invention, il est possible d'équiper l'élément plastique d'un insert s'étendant entre les nervures et le corps de l'élément plastique. L'élément plastique conserve ainsi l'avantage de rigidité conféré par les nervures, tout en pouvant être équipé d'inserts de relativement grande taille, plus faciles à manipuler et assurant, dans le cas d'inserts comprenant des composants électriques, une continuité électrique permettant de rendre tactile la surface extérieure de l'élément plastique.

En outre, l'insert n'est pas déformé pendant l'injection de matériau de moulage. Les risques d'endommagement de l'insert sont donc réduits.

## Revendications

1. Procédé de moulage d'un élément plastique (10) comprenant un corps (12) présentant une surface (20) à partir de laquelle s'étend au moins une nervure (16), et un insert (18), disposé entre le corps (12) et l'au moins une nervure (16) et agencé au moins partiellement contre ladite surface (20) et sous ladite nervure (16), le procédé comprenant les étapes suivantes :
- installation de l'insert (18) contre une paroi (58) d'une cavité d'injection (56), ladite paroi (58) comprenant au moins une fente (62) s'étendant au moins partiellement en regard d'au moins une partie de l'insert (18), ladite fente (62) étant adaptée pour former la nervure (16) de l'élément plastique (10), et
- injection de matériau de moulage dans la cavité d'injection (56) pour créer le corps (12) et la nervure (16) de l'élément plastique (10),
**caractérisé en ce qu'**un élément de support (70) est disposé dans la fente (62), contre l'insert (18), pour supporter ledit insert (18) pendant l'injection.

2. Procédé de moulage selon la revendication 1, **caractérisé en ce que** l'insert (18) comprend un composant électrique (30).

3. Procédé de moulage selon la revendication 1, **caractérisé en ce que** l'insert (18) comprend au moins un film (32).

4. Procédé de moulage selon l'une quelconque des revendications précédentes, **caractérisé en ce que** la paroi (58) contre laquelle est installé l'insert (18) définit une surface (60) de réception de l'insert (18), et **en ce que** l'élément de support (70) définit une surface (72) d'appui de l'insert (18) qui, lorsque l'élément de support (70) est disposé dans la fente (62), s'étend sensiblement dans le prolongement de la surface de réception (60).

5. Procédé de moulage selon l'une quelconque des revendications précédentes, **caractérisé en ce que** l'élément de support (70) est configuré pour former une fenêtre (26) entre la nervure (16) et le corps (12), au droit de l'insert (18).

6. Procédé de moulage selon l'une quelconque des revendications précédentes, **caractérisé en ce que** la cavité d'injection (56) est délimitée par deux parties de moule (52, 54) mobiles l'une par rapport à l'autre selon une direction longitudinale (L) de démoulage de l'élément plastique (10), et **en ce que** l'élément de support (70) est manœuvré par l'intermédiaire d'un bras (82) adapté pour coulisser à l'intérieur de l'une (54) de ces deux parties de moule (52, 54) suivant une direction de coulissement inclinée par rapport à la direction longitudinale (L).

7. Elément plastique (10) obtenu par le procédé selon la revendication 1, comprenant un corps (12), au moins une nervure (16) s'étendant sur une face (20) dudit corps (12), et un insert (18) s'étendant le long de ladite face (20) du corps (12), à cheval sur la nervure (16), tel que que la nervure (16) et le corps (12) délimitent ensemble une fenêtre (26), l'insert (18) s'étendant au travers de ladite fenêtre (26).

8. Elément plastique (10) selon la revendication 7, **caractérisé en ce que** l'insert (18) comprend un composant électrique (30).

9. Elément plastique (10) selon la revendication 7, **caractérisé en ce que** l'insert (18) comprend au moins un film (32).

10. Véhicule automobile comprenant un élément plastique (10) selon l'une quelconque des revendications 7 à 9.

## Patentansprüche

1. Verfahren zum Formen eines Kunststoffelementes (10), das einen Körper (12) mit einer Fläche (20), von der sich mindestens eine Rippe (16) erstreckt, und einen Einsatz (18), der zwischen dem Körper (12) und der mindestens einen Rippe (16) angeordnet ist und mindestens teilweise an der Fläche (20) und unter der Rippe (16) liegt, umfasst, wobei das Verfahren die folgenden Schritte aufweist:
- Anordnen des Einsatzes (18) gegen eine Wand (58) eines Einspritzhohlraums (56), wobei die Wand (58) mindestens einen Spalt (62) umfasst, der sich mindestens teilweise gegenüber mindestens eines Teils des Einsatzes (18) erstreckt, wobei der Spalt (62) angepasst ist, die Rippe (16) des Kunststoffelementes (10) zu bilden, und
- Einspritzen des Spritzmaterials in den Einspritzhohlraum (56), um den Körper (12) und die Rippe (16) des Kunststoffelementes (10) zu erzeugen,
**dadurch gekennzeichnet, dass** ein Stützelement (80) in dem Spalt (62) gegen den Einsatz (18) angeordnet wird, um den Einsatz (18) während des Einspritzens zu stützen.

2. Formverfahren nach Anspruch 1, **dadurch gekennzeichnet, dass** der Einsatz (18) eine elektrische Komponente (30) umfasst.

3. Formverfahren nach Anspruch 1, **dadurch gekennzeichnet, dass** der Einsatz (18) mindestens eine Folie (32) umfasst.

4. Formverfahren nach einem beliebigen der vorhergehenden Ansprüche, **dadurch gekennzeichnet, dass** die Wand (58), gegen die der Einsatz (18) installiert wird, eine Fläche (60) zur Aufnahme des Einsatzes (18) definiert und dass das Stützelement (70) eine Fläche (72) zum Abstützen des Einsatzes (18) definiert, die, wenn das Stützelement (70) in dem Spalt (62) angeordnet wird, sich im Wesentlichen in der Verlängerung der Aufnahmefläche (60) erstreckt.

5. Formverfahren nach einem beliebigen der vorhergehenden Ansprüche, **dadurch gekennzeichnet, dass** das Stützelement (70) ausgebildet ist, ein Fenster (26) zwischen der Rippe (16) und dem Körper (12) senkrecht zum Einsatz (18) zu bilden.

6. Formverfahren nach einem beliebigen der vorhergehenden Ansprüche, **dadurch gekennzeichnet, dass** der Einspritzhohlraum (56) von zwei Teilen der Form (52, 54) begrenzt ist, die zueinander gemäß einer Längsrichtung (L) der Entformung des Kunststoffelementes (10) beweglich sind, und dass das Stützelement (70) über einen Arm (82) betätigt wird, der angepasst ist, im Inneren eines (54) dieser zwei Formteile (52, 54) gemäß einer geneigten Verschieberichtung in Bezug auf die Längsrichtung (L) zu gleiten.

7. Kunststoffelement (10), das durch das Verfahren nach Anspruch 1 erhalten wird, umfassend einen Körper (12) und mindestens eine Rippe (16), die sich auf einer Fläche (20) des Körpers (12) erstreckt, und einen Einsatz (18) der sich entlang der Fläche (20) des Körpers (12), auf der Rippe (16) aufsitzend, erstreckt, derart dass die Rippe (16) und der Körper (12) zusammen ein Fenster (26) begrenzen und der Einsatz (12) sich durch das Fenster (26) erstreckt.

8. Kunststoffelement (10) nach Anspruch 7, **dadurch gekennzeichnet, dass** der Einsatz (18) eine elektrische Komponente (30) umfasst.

9. Kunststoffelement (10) nach Anspruch 7, **dadurch gekennzeichnet, dass** der Einsatz (18) mindestens eine Folie (32) umfasst.

10. Kraftfahrzeug, ein Kunststoffelement (10) nach einem beliebigen der Ansprüche 7 bis 9 umfassend.

## Claims

1. A method for molding a plastic element (10) comprising a body (12) having a surface (20) from which at least one rib (16) extends, and an insert (18) at least partially arranged against said surface (20) and under said rib (16), the method comprising the following steps:
- installing the insert (18) against a wall (58) of an injection cavity (56), said wall (58) comprising at least one slit (62) extending at least partially opposite at least one part of the insert (18), said slit (62) being adapted to form the rib (16) of the plastic element (10), and
- injecting molding material into the injection cavity (56) to create the body (12) and the rib (16) of the plastic element (10),
**characterized in that** a support element (70) is positioned in the slit (62), against the insert (18), to support said insert (18) during the injection.

2. The molding method according to claim 1, **characterized in that** the insert (18) comprises an electric component (30).

3. The molding method according to claim 1, **characterized in that** the insert (18) comprises at least one film (32).

4. The molding method according to any one of the preceding claims, **characterized in that** the wall (58) against which the insert (18) is installed defines a surface (60) for receiving the insert (18), and **in that** the support element (70) defines a support surface (72) of the insert (18) which, when the support element (70) is positioned in the slit (62), extends substantially in the extension of the receiving surface (60).

5. The molding method according to any one of the preceding claims, **characterized in that** the support element (70) is configured to form a window (26) between the rib (16) and the body (12), at the insert (18).

6. The molding method according to any one of the preceding claims, **characterized in that** the injection cavity (56) is delimited by two mold parts (52, 54) that can move relative to one another in a longitudinal direction (L) for stripping the plastic element (10), and **in that** the support element (70) can be maneuvered via an arm (82) adapted to slide inside one (54) of these two mold parts (52, 54) in a sliding direction that is tilted relative to the longitudinal direction (L).

7. A plastic element (10) obtained by the method of claim 1 comprising a body (12) and at least one rib (16) extending over one surface (20) of said body (12), an insert (18) extending along said surface (20) of the body (12), overlapping on the rib (16), such that the rib (16) and the body (12) together delimit a window (26), the insert (18) extending through said window (26).

8. The plastic element (10) according to claim 7, **characterized in that** the insert (18) comprises an electric component (30).

9. The plastic element (10) according to claim 7, **characterized in that** the insert (18) comprises at least one film (32).

10. A motor vehicle comprising a plastic element (10) according to any one of claims 7 to 9.
